# EUROPEAN PATENT APPLICATION

(11) **EP 4 737 135 A1**
(43) Date of publication of application: **06.05.2026**
(21) Application number: 24832458.4
(22) Date of filing: 27.06.2024
(51) Int. Cl.: B60C 11/03, B60C 11/04, B60C 11/13

(54) **HEAVY-DUTY TIRE**

(30) Priority: 30.06.2023 KR 20230085201
(71) Applicant: HANKOOK TIRE & TECHNOLOGY CO., LTD, Gyeonggi-do 13494 (KR)
(72) Inventor: JANG, Tae Young, Daejeon 34127 (KR); CHUN, Eun Chang, Daejeon 34119 (KR)
(74) Representative: Witte, Weller & Partner Patentanwälte mbB
(86) International application number: PCT/KR2024/008956
(87) International publication number: WO 2025/005680

(57) **Abstract**

A heavy-duty tire with enhanced pattern stiffness and suppressed irregular wear is disclosed. The tire comprises a block portion including a center rib and side ribs, and a main groove extending circumferentially between them. A hidden groove and a reinforcing rib are formed alternately and spaced apart within the main groove. The hidden groove and the reinforcing rib enhance pattern stiffness by allowing the center and side ribs to contact laterally. The reinforcing rib disperses forces generated during driving and braking, effectively suppressing irregular wear. Furthermore, the reinforcing rib is configured to wear while maintaining a step difference of 2 mm to 3 mm with the adjacent block portion, thereby significantly improving drainage performance from an initial stage of wear.

## Description

### BACKGROUND

### Field

The present disclosure relates to a heavy-duty tire in which pattern rigidity is improved and irregular wear is suppressed, and more particularly, to a heavy-duty tire capable of enhancing drainage performance while simultaneously improving pattern rigidity and suppressing irregular wear.

### Description of the Related Art

Generally, to secure various performances such as drainage performance, braking performance, and heat generation in pneumatic tires for heavy-duty use, a tread of a pneumatic tire for a vehicle is provided with a plurality of grooves, and a plurality of blocks are separated and formed by the grooves.

Among the important performances of a tire, the enhancement of the function of water absorption and drainage on a wet road surface is gradually being emphasized, and a technology for maintaining or increasing the durability of the tire while enhancing the function of water absorption and drainage is required.

To this end, a conventional technology has been developed to form a separate hidden channel in a groove of a tire.

Such a hidden channel has the effect of improving mileage, driving performance, and rolling resistance, and also the effect of improving pattern stiffness.

However, this technology had a problem in that the drainage performance decreased due to the reduction of the groove area at the initial stage of wear. And, the hidden channel is exposed when the wear rate exceeds 70%, thereby improving the drainage performance, but conversely, the pattern stiffness decreases, leading to problems such as irregular wear and decreased driving performance.

Therefore, a technology is required that enhances drainage performance and prevents pattern stiffness from decreasing even after the middle stage of wear.

### SUMMARY

The present invention is directed to solving the above-mentioned problems in the related art, and an object of the present invention is to provide a heavy-duty tire that enhances drainage while simultaneously improving pattern stiffness and suppressing irregular wear.

The above object is achieved by a heavy-duty tire comprising: A block portion comprising a center rib and side ribs provided on both sides of the center rib; A main groove provided to partition the space between the center rib and the side ribs and extending in a circumferential direction of the tire; A hidden groove formed in the main groove; and A reinforcing rib formed in the main groove, wherein the hidden groove and the reinforcing rib are formed alternately in the main groove, being spaced apart from each other.

According to an embodiment, the center rib and the side ribs are brought into lateral contact via the hidden groove and the reinforcing rib, thereby enhancing the pattern stiffness, which improves driving performance and rolling resistance. Furthermore, the reinforcing rib disperses and absorbs the force generated in the center rib and the side ribs during driving and braking, reducing the irregular wear of the center rib and the side ribs. Moreover, the reinforcing rib wears while maintaining a step difference of 2 mm to 3 mm with the adjacent center rib and side ribs, thereby improving drainage performance from an initial stage of wear compared to when only the hidden groove is present.

### BRIEF DESCRIPTION OF DRAWINGS

Figure 1 is an exemplary view of a heavy-duty tire with enhanced pattern stiffness and suppressed irregular wear according to an embodiment of the present invention.
Figure 2 is a plan view of the main groove, the hidden groove, and the reinforcing rib according to an embodiment of the present invention.
Figure 3 is a cross-sectional view taken along line A-A of the main groove in Figure 2.
Figure 4 is a cross-sectional view taken along line B-B of the hidden groove in Figure 2.

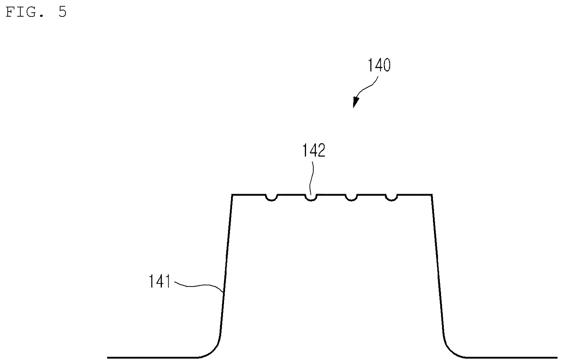

Figure 5 is a longitudinal cross-sectional view of the reinforcing rib according to an embodiment of the present invention.
Figure 6 is a cross-sectional view taken along line C-C of the reinforcing rib in Figure 2.
Figure 7 is an exemplary view of the reinforcing rib according to an embodiment of the present invention.

### DETAILED DESCRIPTION

In the following description of the present invention, a detailed description of related known functions or configurations may be omitted if it is deemed to unnecessarily obscure the gist of the present invention.

Since embodiments according to the concept of the present invention are subject to various changes and may take various forms, specific embodiments will be illustrated in the drawings and described in detail in the present specification or application.

However, this is not intended to limit the embodiments according to the concept of the present invention to the specific disclosed forms, and the present invention should be understood to include all modifications, equivalents, and substitutes included within the spirit and technical scope of the present invention.

When a component is referred to as being "connected" or "coupled" to another component, it is to be understood that it may be directly connected or coupled to the other component, or intervening components may be present. On the other hand, when a component is referred to as being "directly connected" or "directly coupled" to another component, it is to be understood that no intervening components are present. Other expressions describing the relationship between components, such as "between" and "immediately between" or "adjacent to" and "directly adjacent to," are to be interpreted in the same way.

The terminology used herein is for the purpose of describing particular embodiments only and is not intended to be limiting of the invention. The singular forms "a," "an," and "the" are intended to include the plural forms as well, unless the context clearly indicates otherwise. In this specification, terms such as "comprise" or "have" are intended to denote the presence of features, numbers, steps, operations, elements, parts, or combinations thereof, and should not be understood to preclude the possibility of the presence or addition of one or more other features, numbers, steps, operations, elements, parts, or combinations thereof.

Hereinafter, the present invention will be described in more detail with reference to the accompanying drawings illustrating embodiments of the present invention.

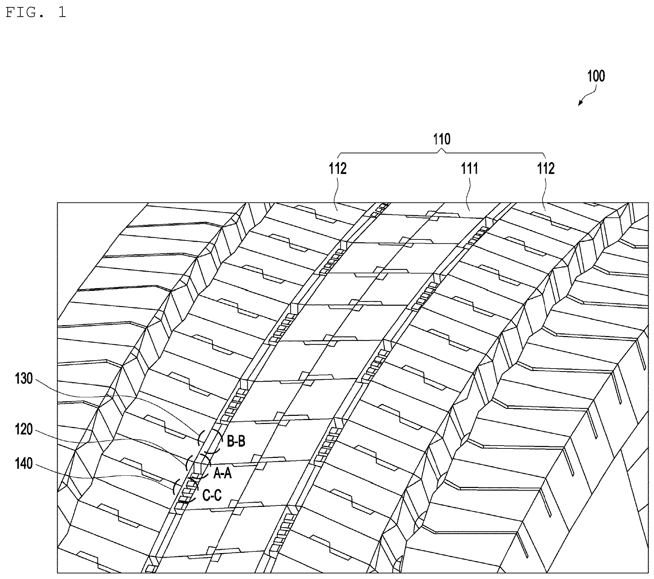

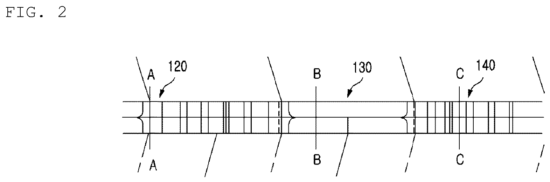

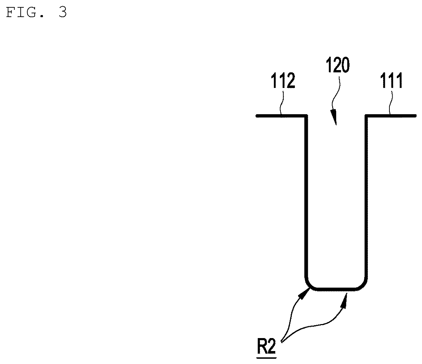

Referring to Figures 1 to 3, a heavy-duty tire(100) with enhanced pattern stiffness and suppressed irregular wear is composed of a tread, a sidewall, and a bead portion, and may include a block portion(110) partitioned by the main groove(120) on the surface of the tread. In addition, the heavy-duty tire(100) with enhanced pattern stiffness and suppressed irregular wear may include a hidden groove(130) and a reinforcing rib(140) formed in the main groove(120).

More specifically, the block portion(110) may consist of a center rib(111) and side ribs(112) provided on both sides of the center rib(111).

The center rib(111) is located at the center in the width direction of the tire and may extend toward the circumferential direction. The center rib(111) may be composed of a plurality of blocks partitioned by lateral sipes.

The side ribs(112) are located on both sides of the center rib(111) and may extend toward the circumferential direction. The side ribs(112) may be composed of a plurality of blocks partitioned by lateral sipes.

The main groove(120) may be provided in a pair to partition the space between the center rib(111) and the side ribs(112) formed on both sides of the center rib(111), and may extend in the circumferential direction of the tire.

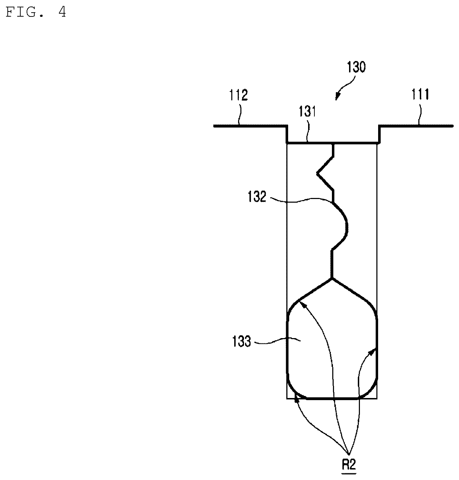

Referring to Figure 4, the hidden groove(130) is formed in the main groove(120) and may be provided to be formed at regular intervals along the longitudinal direction of the main groove (120) .

The hidden groove(130) may include a hidden block(131), a hidden kerf(132), and a hidden channel(133).

The hidden block(131) is provided to form the body of the hidden groove (130), and may extend by a certain length along the longitudinal direction of the main groove(120). For example, the hidden block(131) may extend to a length that is less than or equal to the circumferential length of a block forming the center rib(111). In addition, the hidden block(131) may be formed to have a width such that both side surfaces are in contact with the center rib(111) and the side ribs(112). The hidden block(131) provided in this way enhances the pattern stiffness as the center rib(111) and the side ribs(112) contact each other in a lateral direction, thereby providing the effect of improving driving performance and rolling resistance.

The hidden kerf(132) may extend in the depth direction of the hidden block(131). Specifically, the hidden kerf(132) may extend from the center of the hidden block(131) in the depth direction of the hidden block(131). And, the hidden kerf(132) may be provided to extend while being bent or having a curved shape in one direction and the other direction as it extends in the depth direction of the hidden block(131).

The hidden channel(133) is formed in the hidden block(131) and may be provided to extend at the lower part of the hidden kerf(132). The hidden channel (133) may be provided such that its width gradually increases from the lower end of the hidden kerf(132) toward the lower part of the hidden block(131). And, the hidden channel (133) may be provided such that its width gradually increases until it reaches a maximum width, then maintains a constant width, and then has a round shape corresponding to the lower end round shape of the main groove (120) at the bottom. However, the shape of the hidden channel(133) is not limited thereto.

Meanwhile, the hidden block(131) is formed to have a width of 100% to 200% of the width of the reinforcing rib(140), and the hidden channel(133) may also be provided to have a corresponding width. And, the hidden channel(133) may be formed such that its cross-sectional area in the width direction is 80% or less of the cross-sectional area in the width direction of the main groove(120). To satisfy this, the width of the hidden channel(133) and the ratio of the depth of the hidden channel(133) to the hidden kerf(132) may be controlled.

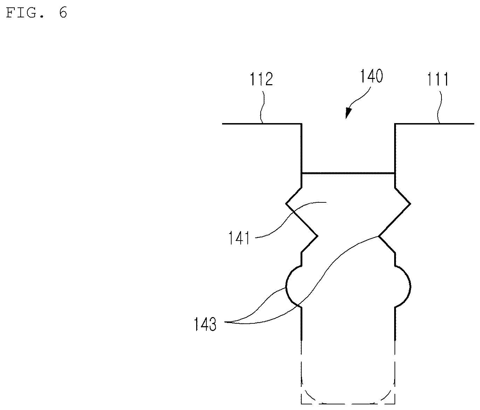

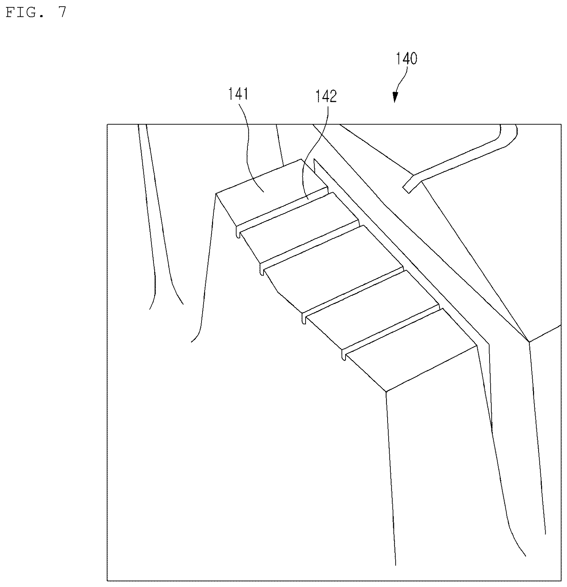

Referring to Figures 6 and 7, the reinforcing rib(140) is formed in the main groove(120) and may be provided to be formed at regular intervals along the longitudinal direction of the main groove(120).

The reinforcing rib(140) may include a reinforcing body(141), a reinforcing recess(142), and a reinforcing kerf (143) .

The reinforcing body(141) is provided to form the body of the reinforcing rib(140), and may extend by a certain length along the longitudinal direction of the main groove(120). For example, the reinforcing body(141) may extend to a length that is less than or equal to the circumferential length of a block forming the center rib(111). More specifically, the length of the upper surface of the reinforcing body(141) may be formed to be 2 mm smaller than 0.8 times the circumferential length of a block forming the center rib (111). However, the length of the upper surface of the reinforcing body(141) is not limited thereto. In addition, the reinforcing body(141) may be provided such that its length in the direction of the main groove(120) increases toward the bottom, and the angle of this increasing length may be 5 degrees or less. Further, the reinforcing body(141) may be formed to have a width of 70% or more of the width of the main groove (120). At this time, when the reinforcing body(141) is formed to have the maximum width, both sides thereof may be provided to be in contact with the center rib(111) and the side ribs(112), respectively. The reinforcing body(141) provided in this way enhances the pattern stiffness as the center rib(111) and the side ribs(112) contact each other in a lateral direction, thereby providing the effect of improving driving performance and rolling resistance. And, the reinforcing body(141) may be formed to have a height of 80% to 90% of the depth of the main groove(120). The reinforcing body(141) provided in this way may be provided to wear while maintaining a step difference of 2 mm to 3 mm from the adjacent block portion(110).

The reinforcing recess(142) is formed on the upper surface of the reinforcing body(141) at regular intervals and may be formed to have a depth of 0.5 mm or less. And, the reinforcing recess(142) may be provided with a rounded lower surface of R 0.5.

The reinforcing kerf(143) may be formed on the surface of the reinforcing body(141) facing the block portion(110). Specifically, the reinforcing kerf(143) may be provided to extend while being bent or having a curved shape in one direction and the other direction as it extends in the depth direction of the reinforcing body(141).

The hidden groove(130) and the reinforcing rib(140) provided as described above are formed alternately in the main groove(120), and the hidden groove(130) and the reinforcing rib(140) may be formed spaced apart from each other.

In the present invention provided in this way, the reinforcing rib(140) disperses and absorbs the force generated in the center rib(111) and the side ribs(112) during driving and braking, and thus wears, which can reduce the irregular wear of the center rib(111) and the side ribs(112). In particular, even when the hidden groove(130) wears down and the hidden channel(133) is exposed, the pattern stiffness can be continuously maintained even in the later stage of wear because the reinforcing rib(140) disperses and absorbs the force.

Furthermore, according to the present invention, since the reinforcing rib(140) disperses the force and wears while continuously maintaining a step difference of 2 mm to 3 mm with the adjacent center rib(111) and side ribs(112), water can flow through this step difference portion. Therefore, the present invention provides the effect of improving drainage performance from the initial stage of wear compared to when only the hidden groove(130) is present in the main groove(120).

It should be noted that the technical idea of the present invention described above has been specifically described in preferred embodiments, but the embodiments are for explanation and not for limitation. In addition, those skilled in the technical field of the present invention will understand that various embodiments are possible within the scope of the technical idea of the present invention. Therefore, the true scope of technical protection of the present invention should be determined by the technical idea of the appended claims.

## Claims

1. A heavy-duty tire, comprising: a block portion comprising a center rib and side ribs provided on both sides of the center rib; a main groove provided to partition a space between the center rib and the side ribs and extending in a circumferential direction of the tire; a hidden groove formed in the main groove; and a reinforcing rib formed in the main groove, wherein the hidden groove and the reinforcing rib are formed alternately in the main groove, being spaced apart from each other.

2. The heavy-duty tire of claim 1, wherein the hidden groove comprises: a hidden block forming a body; a hidden kerf extending in a depth direction of the hidden block; and a hidden channel formed at a lower part of the hidden kerf.

3. The heavy-duty tire of claim 2, wherein the hidden block is formed to have a width that is 100% to 200% of a width of the reinforcing rib.

4. The heavy-duty tire of claim 3, wherein the hidden channel is formed such that its cross-sectional area in a width direction is 80% or less of a cross-sectional area in the width direction of the main groove.

5. The heavy-duty tire of claim 1, wherein the reinforcing rib is formed to have a width of 70% or more of a width of the main groove.

6. The heavy-duty tire of claim 5, wherein the reinforcing rib is formed to have a height of 80% to 90% of a depth of the main groove.

7. The heavy-duty tire of claim 6, wherein the reinforcing rib is formed such that it wears while maintaining a step difference of 2 mm to 3 mm relative to the adjacent block portion.

8. The heavy-duty tire of claim 1, wherein the reinforcing rib comprises: a reinforcing body forming a body; a reinforcing recess formed on an upper surface of the reinforcing body; and a reinforcing kerf formed on a surface of the reinforcing body facing the block portion.

9. The heavy-duty tire of claim 8, wherein both sides of the reinforcing body contact the center rib and the side ribs, respectively.

10. The heavy-duty tire of claim 8, wherein the reinforcing recesses are formed at equal intervals on the top surface of the reinforcing body and have a depth of 0.5 mm or less.
